**Europäisches Patentamt**

**European Patent Office**

**Office européen des brevets**

(11) Veröffentlichungsnummer: **0 075 816**
**A2**

(12) **EUROPÄISCHE PATENTANMELDUNG**

(21) Anmeldenummer: **82108644.4**

(22) Anmeldetag: **18.09.82**

(51) Int. Cl.³: **B 29 C 17/07**

(30) Priorität: **26.09.81 DE 3138399**

(43) Veröffentlichungstag der Anmeldung:
**06.04.83 Patentblatt 83/14**

(84) Benannte Vertragsstaaten:
**BE DE FR GB IT SE**

(71) Anmelder: **BASF Aktiengesellschaft**
**Carl-Bosch-Strasse 38**
**D-6700 Ludwigshafen(DE)**

(72) Erfinder: **Bauer, Peter**
**Erich-Kaestner-Strasse 13**
**D-6700 Ludwigshafen(DE)**

(72) Erfinder: **Schmidtchen, Juergen, Dr.**
**Pierstrasse 4**
**D-6710 Frankenthal(DE)**

(54) **Verfahren zur Herstellung von Hohlkörpern aus einem Dreischichtenverbund und Verwendung der Hohlkörper zur Aufbewahrung von Kohlenwasserstoffgemischen.**

(57) Die Erfindung betrifft ein Verfahren zur Herstellung von Hohlkörpen, die aus einem Dreischichtenverbund (a, b, c) bestehen, bei dem ein Zweischichtenverbund (a, b) so in eine Form eingelegt wird, daß die Schicht (a) an der Innenseite der Formwand anliegt und bei dem als dritte Schicht (c) ein thermoplastischer Kunststoff bis zum Anliegen und Verbinden mit der Schicht (b) blasgeformt wird, wobei in dem Zweischichtenverbund (a, b) die erste Schicht (a) aus einem gasundurchlässigen oder wenig gasdurchlässigen Stoff mit der zweiten Schicht (b) aus einem thermoplastischen Haftvermittler fest verbunden ist, und der thermoplastische Kunststoff für die dritte Schicht (c) ein Polyethylen der Dichte 0,935 bis 0,965 g/cm³ und des Schmelzindex 0,01 bis 2 g/10 min (190°C/2,16 kp) ist.

Die hergestellten Hohlkörper sind zur Füllung und Aufbewahrung von Kohlenwasserstoffgemischen geeignet.

Verfahren zur Herstellung von Hohlkörpern aus einem Dreischichtenverbund und Verwendung der Hohlkörper zur Aufbewahrung von Kohlenwasserstoffgemischen

Die Erfindung betrifft ein Verfahren zur Herstellung von
Hohlkörpern, die aus einem Dreischichtenverbund (a, b, c)
bestehen, bei dem ein Zweischichtenverbund (a, b) so in
eine Form gelegt wird, daß die Schicht (a) an der Innenseite der Form anliegt und bei dem als dritte Schicht (c)
ein thermoplastischer Kunststoff bis zum Anliegen und
Verbinden mit der Schicht (b) blasgeformt wird.

Beim üblichen Hohlkörperblasverfahren werden Formteile hergestellt, die wegen der Durchlässigkeit der verwendeten
Thermoplaste gegenüber bestimmten Flüssigkeiten, Gasen oder
Dämpfen die Eigenschaft aufweisen, daß der im Hohlkörper
befindliche Stoff, normalerweise eine Flüssigkeit, durch
Eindiffundieren von außen oder durch Diffuison von innen in
seiner Beschaffenheit oder Menge verändert werden kann.

Um diese unerwünschte Eigenschaft zu verbessern, sind bereits verschiedene Methoden beschrieben worden, wie Lackieren oder Beschichten der Außen- oder Innenoberfläche des
Hohlkörpers oder chemische Veränderungen der Oberflächen
durch Einwirkung von reaktionsfähigen Substanzen wie
Schwefeltrioxid, Chlor oder Fluor.

Es ist auch bereits aus der DE-AS 21 10 631 bekannt, daß
ein gasdichter Hohlkörper, vorwiegend gedacht für die
Verwendung als Getränkeflasche, durch Aufbringen einer
Außenschicht aus einem gasdichten Stoff, vorzugsweise
Aluminiumfolie, im Hohlkörperblasverfahren hergestellt
werden kann. Nachteilig bei diesem bekannten Verfahren ist
der Umstand, daß die zwischen dem Thermoplasten und
Aluminium erzielbare Haftung in vielen Fällen nicht aus-

Fre/P

reicht, um bei der Einwirkung von leichtdiffundierenden Substanzen, wie flüssigen Kohlenwasserstoffen, eine dauerhafte Verbindung zu gewährleisten.

In den Literaturstellen DE-OS 17 69 422, DE-OS 22 45 558, DE-OS 22 45 559 und DE-OS 26 06 389 ist bereits beschrieben, daß man zum Verkleben oder Beschichten von Werkstoffen wie Aluminium, Kupfer, Zink oder Eisen mit Kunststoffen ein carboxylgruppenhaltiges Ethylencopolymerisat verwendet, das in Form von Folien in der Wärme und gegebenenfalls unter Druck eingesetzt wird. Die erhaltenen Schichtkörper eignen sich zur Schall- oder Wärmedämmung, für Verkleidungen und Wände im Bauwesen sowie beim Behälter-, Möbel-, Flugzeug-, Schiff- und Fahrzeugbau.

Der Erfindung lag die Aufgabe zugrunde, Hohlkörper aus einem Mehrschichtenverbund herzustellen, welche gegenüber der Einwirkung von Kohlenwasserstoffen, auch bei erhöhten Temperaturen, eine geringe Permeation aufweisen.

Diese Aufgabe wurde dadurch gelöst, daß in dem Zweischichtenverbund (a, b), der in die Form eingelegt wird, die erste Schicht (a) aus einem gasundurchlässigen oder wenig gasdurchlässigen Stoff mit der zweiten Schicht (b) aus einem thermoplastischen Haftvermittler fest verbunden ist, und daß der thermoplastische Kunststoff für die dritte Schicht (c) ein Polyethylen der Dichte 0,935 bis 0,965 g/cm$^3$ und des Schmelzindex 0,01 bis 2 g/10 min (190$^\circ$C/2,16 kp) ist.

Verfahren zur Herstellung von Hohlkörpern nach dem Blasverfahren, wobei der Hohlkörper aus einem Mehrschichtenverbund besteht, sind bekannt und beispielsweise in den Literaturstellen DE-AS 21 10 631, US-PS 3 091 000, US-PS 3 292 209 beschrieben. Bei dem erfindungsgemäßen Verfahren wird, ana-

log den bekannten Verfahren, ein Zweischichtenverbundkörper (a, b) so in eine Form eingelegt, daß die Schicht (a) an der Innenwand der Form anliegt und die Schicht (b) die Innenoberfläche der Form ausmacht. Anschließend wird der thermoplastische Kunststoff für die dritte Schicht (c) bis zum Anliegen und Verbinden mit der Innenoberfläche der beiden Folien (a, b) blasgeformt.

Unter einem gasundurchlässigen oder wenig gasdurchlässigen Stoff, aus dem die Schicht (a) aufgebaut ist, werden Metallfolien, beispielsweise aus Aluminium, Stahl, Kupfer oder Kunststoffolien, z.B. aus Polyvinylidenchlorid, Polyvinylchlorid oder Polyamid verstanden. Die Folien der Außenschicht (a) sind im allgemeinen 0,01 bis 0,5 mm, bevorzugt 0,02 bis 0,2 mm dick. Die Herstellung dieser Folien erfolgt nach üblichen Verfahren.

Diese Folien der Außenschicht (a) sind einseitig mit einem thermoplastischen Haftvermittler beschichtet. Unter thermoplastischem Haftvermittler werden dabei die an sich bekannten Haftvermittler bestehend aus Copolymerisaten des Ethylens mit Acrylsäure, Acrylsäureestern und/oder Vinylacetat verstanden. Als Haftvermittler eignen sich z.B. die in den deutschen Patentschriften 17 69 422 und 19 18 214 beschriebenen Carboxylgruppen aufweisenden Olefincopolymerisate. Geeignet sind auch Terpolymerisate aus Ethylen, einer ethylenisch ungesättigten Carbonsäure und einem Ester einer ethylenisch ungesättigten Carbonsäure, wie sie aus den DE-OS 17 95 269, DE-OS 27 53 697 und DE-OS 16 69 685 bekannt sind. Wichtig für eine gute Verbindung der beiden Schichten (a) und (b) ist dabei, daß der Haftvermittler bis über die Schmelztemperatur erwärmt wird. Der Verbundstoff aus (a) und (b) kann in einem Arbeitsgang nach üblichen Verfahren hergestellt werden. Die Schichtdicke der Schicht (b) beträgt zweckmäßig 0,005 bis 0,2, bevorzugt 0,01 bis 0,1 mm.

Der thermoplastische Kunststoff für die dritte Schicht (c) muß ein Polyethylen der Dichte 0,935 bis 0,965 g/cm$^3$ (nach DIN 53 735) und des Schmelzindex 0,01 bis 2 g/10 min (190°C/2,16 kp nach ASTM D 1238-65T) sein. Die erfindungsgemäß einzusetzenden Polyethylene werden hergestellt durch Polymerisation mittels sogenannter Ziegler- oder Phillips--Katalysatoren. Die Schichtdicke der Schicht (c) beträgt zweckmäßig 1 bis 10, bevorzugt 2 bis 5 mm.

Die Polyethylenschicht wird auf die in der Form befindliche Schicht (a, b) nach den eingangs beschriebenen üblichen Blasverfahren aufgebracht.

Die mit der Erfindung erzielten Vorteile sind insbesondere darin zu sehen, daß Hohlkörper herstellbar sind, die eine dauerhaft an der Außenseite verbundene Schicht aus gasdichtem oder wenig gasdurchlässigem Material aufweisen. Es werden nach erfindungsgemäßem Verfahren Schälfestigkeiten zwischen den Schichten (a) und (c) von mehr als 4 Newton pro cm Prüfbreite erreicht, während ohne Verwendung des Haftvermittlers nur 0,2 Newton erzielt werden. Auch die Einwirkung von Kohlenwasserstoffen bewirkt keine Ablösungserscheinungen, die ihrerseits die Permeation von Kohlenwasserstoffen beeinflussen würde. Die Verminderung der Permeation gegenüber Kohlenwasserstoffen ist beträchtlich. So zeigt ein derart hergestellter Prüfhohlkörper, gefüllt mit niedrigsiedendem Kohlenwasserstoffgemisch, verglichen mit einem unbeschichteten Hohlkörper gleicher Form und gleichen Gewichts eine Permeationsverminderung von 81 auf 19 g. Nach Füllung mit Kohlenwasserstoffgemisch und zweijähriger Lagerung bei 40°C waren bei den erfindungsgemäßen Formkörpern keine Ablösungserscheinungen oder Änderungen im Permeationsverhalten aufgetreten.

Patentansprüche

1. Verfahren zur Herstellung von Hohlkörpern, die aus einem Dreischichtenverbund (a, b, c) bestehen, bei dem ein Zweischichtenverbund (a, b) so in eine Form eingelegt wird, daß die Schicht (a) an der Innenseite der Formwand anliegt und bei dem als dritte Schicht (c) ein thermoplastischer Kunststoff bis zum Anliegen und Verbinden mit der Schicht (b) blasgeformt wird, dadurch gekennzeichnet, daß in dem Zweischichtverbund (a, b) die erste Schicht (a) aus einem gasundurchlässigen oder wenig gasdurchlässigen Stoff mit der zweiten Schicht (b) aus einem thermoplastischen Haftvermittler fest verbunden ist, und daß der thermoplastische Kunststoff für die dritte Schicht (c) ein Polyethylen der Dichte 0,935 bis 0,965 g/cm$^3$ und des Schmelzindex 0,01 bis 2 g/10 min (190$^\circ$C/2,16 kp) ist.

2. Verwendung der nach Anspruch 1 hergestellten Hohlkörper zur Füllung und Aufbewahrung von Kohlenwasserstoffgemischen.